# FASCICULE DE BREVET EUROPEEN

(11) **EP 2 072 720 B1**
(45) Date de publication et mention de la délivrance du brevet: **07.07.2010**
(21) Numéro de dépôt: 08170306.8
(22) Date de dépôt: 28.11.2008
(51) Int. Cl.: E05B 65/08, E05C 9/08, B60J 1/16, E05D 15/10

(54) **Dispositif d'obturation d'une baie à l'aide d'un panneau mobile, à rampe de verrouillage, et véhicule correspondant**
Abdichtvorrichtung einer Öffnung mit Hilfe eines beweglichen Paneels mit Verriegelungsrampe, und entsprechendes Kraftfahrzeug
Device for blocking an opening using a mobile panel, with a locking ramp, and corresponding vehicle

(30) Priorité: 18.12.2007 FR 0759960
(43) Date de publication de la demande: 24.06.2009
(73) Titulaire: Advanced Comfort Systems France - ACS France, 79300 Bressuire (FR)
(72) Inventeur: Tarzaim, Karim, 85200 Fontanay le Comte (FR)
(74) Mandataire: Bioret, Ludovic

(56) Documents cités:
- EP-A- 1 920 957
- EP-A1- 0 778 168
- EP-A1- 0 857 844
- EP-A1- 1 022 172
- FR-A- 2 878 281
- US-A- 4 850 139

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, et comprenant au moins un ensemble mobile coulissant, comportant un panneau mobile susceptible de libérer ou de fermer une ouverture ménagée dans ces dispositifs.

### 2. Techniques de l'art antérieur

### 2.1. Vitres classiques

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture des vitres est de rendre celle-ci mobile verticalement dans son propre plan, en la faisant pénétrer ou sortir du caisson ou de la garniture des portières latérales.

Cette technique présente cependant de nombreux inconvénients. Les moyens d'actionnement et d'entraînement sont lourds, encombrants et complexes à monter. Les portes qui en résultent présentent en conséquence un volume important, nuisant au volume disponible à l'intérieur du véhicule (largeur aux coudes notamment).

Elles ont de plus un coût de fabrication élevé et posent classiquement des problèmes d'étanchéité. La maintenance est également complexe. Elles imposent en outre des contraintes sur le plan de l'esthétique et de l'ergonomie.

### 2.2. Baies affleurantes (« baies flush »)

Une autre technique a été proposée par le titulaire de la présente demande de brevet. Cette technique est notamment décrite dans les documents de brevet EP - 0 778 168 et EP - 0 857 844. Le dispositif d'obturation (appelé par la suite "baie flush") présenté dans ces documents comprend un ensemble fixe et un panneau mobile par rapport à cet ensemble fixe. Le panneau mobile est relié à l'ensemble fixe par des éléments fonctionnels qui assurent la mobilité requise et qui sont rapportés sur la face de l'ensemble fixe tournée vers l'intérieur du véhicule.

Une telle baie « flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172. On résout ainsi la plupart des problèmes identifiés plus haut.

Sur le plan esthétique, la baie « flush » présente, vue de l'extérieur, un aspect lisse, affleurant avec la carrosserie, du fait qu'aucun cadre n'est nécessaire.

Le mouvement du panneau mobile peut être, par exemple, basculant ou coulissant. On décrit ci-après, rapidement, un exemple de ce dernier cas.

### 2.3. Coulissement de la baie flush

Pour assurer un coulissement du panneau mobile, constitué généralement par un panneau transparent, les moyens fonctionnels comprennent un dispositif de guidage comportant un premier et un second rails de guidage montés fixes sur l'ensemble fixe de la baie, de part et d'autre de l'ouverture fermée par le panneau mobile. Celui-ci est monté sur les rails, pour coulisser selon une direction longitudinale, dans un plan de coulissement entre une (ou plusieurs) position d'ouverture et une position intermédiaire de dégagement dans laquelle il est en regard de la baie et dégagé de celle-ci.

Selon une technique particulière, des moyens d'articulation assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie.

De telles articulations permettent ainsi au panneau mobile de passer du plan formé par l'ensemble fixe (position d'obturation) à un plan sensiblement parallèle de coulissement, et réciproquement.

Cette décomposition de mouvements de déplacement longitudinal et d'enchâssement transversal est particulièrement avantageuse, car elle permet une ouverture du panneau mobile le long du véhicule (par exemple parallèlement au flanc de celui-ci) tout en assurant à la fermeture, un enchâssement du panneau mobile dans la baie.

On notera qu'il a été envisagé de combiner les deux mouvements, sous la forme d'un mouvement louvoyant, selon lequel le bord distal (c'est à dire le bord éloigné des moyens de verrouillage, également appelé bord avant) du panneau mobile se trouve, en fin de course, dans le plan de la baie (le panneau mobile étant alors « en travers », entre le plan d'obturation et le plan de coulissement). Il suffit alors de ramener, manuellement, le bord proximal (c'est à dire le bord proche des moyens de verrouillage, également appelé bord arrière) pour assurer l'obturation.

L'invention se rapporte plus particulièrement à ce type de dispositif d'obturation, à ses variantes et ses perfectionnements. Toutefois, l'invention peut de façon plus large s'appliquer à tous les dispositifs d'obturation dont la cinématique d'ouverture et/ou de fermeture inclut un déplacement « en Y » (c'est-à-dire parallèlement à la largeur du véhicule), entre une position d'ouverture et une position intermédiaire de dégagement, dans un plan parallèle au plan de l'ensemble fixe, et un déplacement « en X » (c'est-à-dire parallèlement à la longueur du véhicule), dans ce plan parallèle.

### 2.4. Verrouillage par pêne et gâche

Le document de brevet FR 2878281 présente une solution de verrouillage d'un dispositif d'obturation de ce type. Ce verrouillage est mis en oeuvre grâce à un pêne fixé à l'extrémité d'une tige de verrouillage et se déplaçant verticalement par rapport au panneau mobile et coopérant avec une gâche définie dans l'ensemble fixe afin de guider le panneau mobile vers sa position d'obturation.

Cette solution présente cependant l'inconvénient d'être relativement complexe à fabriquer et à monter. En particulier, il nécessite un grand nombre de pièces pour assurer le verrouillage,

En effet, le pêne doit être positionné dans le bon sens lors du montage du panneau mobile dans l'ensemble fixe. Ces difficultés de mise en place entraînent plusieurs manipulations d'un nombre élevé de pièces, ce qui augmente bien entendu le coût de fabrication de la baie.

### 3. Objectifs de l'invention

L'invention a donc notamment pour objectif de pallier les inconvénients de l'art antérieur cités ci-dessus.

Plus précisément, l'invention a pour objectif de proposer un dispositif d'obturation d'une baie intégrant un panneau mobile, simplifiant les opérations d'ouverture et de fermeture de ce panneau, et le verrouillage de celui-ci en position d'obturation.

Selon un aspect particulier de l'invention, un objectif est également de fournir un tel dispositif, plus efficace et plus simple que ceux de l'art antérieur.

L'invention a également pour objectif de fournir un tel dispositif d'obturation d'une baie qui permette un verrouillage fiable et sans effort.

L'invention a encore pour objectif de fournir un tel dispositif d'obturation d'une baie qui soit simple à réaliser, à monter sur une portière ou sur un véhicule.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

Un objectif particulier de l'invention est de fournir un tel dispositif qui soit particulièrement facile et simple à fabriquer et à monter, et dont le coût de fabrication et le coût de montage soient par conséquent réduits.

Un autre objectif particulier de l'invention est de fournir un tel dispositif d'obturation qui permette une augmentation du clair de baie, c'est-à-dire de la surface transparente du véhicule.

### 4. Principes généraux de l'invention

Ces objectifs, ainsi que d'autres qui apparaîtront par la suite, sont atteints à l'aide d'un dispositif d'obturation d'une baie ménagée dans la carrosserie d'un véhicule automobile, comprenant un ensemble fixe et au moins un panneau mobile monté sur deux rails de guidage solidaire dudit ensemble fixe, un rail inférieur et un rail supérieur, de façon à pouvoir coulisser dans un premier plan de coulissement sensiblement parallèle à un second plan défini par ledit ensemble fixe, et pouvant venir obturer ou libérer une ouverture ménagée dans ledit ensemble fixe, ledit panneau mobile se plaçant dans ledit second plan, en position d'obturation, ledit panneau mobile portant au moins un pêne destiné à coopérer avec une gâche formée dans un desdits rails.

Selon l'invention, le rail présente une rampe de guidage progressif formée entre ladite gâche et une glissière définie dans le rail, dans laquelle est guidé ledit pêne lors du passage dans ladite position d'obturation.

Ainsi, si le panneau mobile est lâché à proximité immédiate de sa position d'obturation, il sera guidé par la rampe de guidage jusqu'à la gâche, ce qui l'amènera en position d'obturation. On obtient ainsi de façon particulièrement simple un dispositif d'obturation fiable

Selon un mode de réalisation avantageux de l'invention, le pêne est formé par une rotule s'étendant à une extrémité d'une tige de verrouillage.

Cette forme de rotule permet d'une part un meilleur coulissement du pêne dans le rail, et d'autre part une plus grande simplicité de montage : le nombre de pièces est réduit et le pêne peut être mis dans le rail sans qu'il soit nécessaire de le positionner dans un sens particulier.

Préférentiellement, la rampe de guidage progressif présente une pente variable, plus faible au voisinage de la glissière et plus importante au voisinage de la gâche.

De façon avantageuse, la rampe de guidage progressif présente au moins deux parties : une partie de positionnement, assurant un guidage sensiblement parallèle à l'axe de la glissière, et une partie de verrouillage, assurant un guidage sensiblement perpendiculaire à l'axe de la glissière.

Le verrouillage est ainsi effectué de façon fiable et efficace.

Selon un mode de réalisation préférentiel, le rail comporte une rainure définissant deux pistes de guidage : d'une part la glissière, et d'autre part une piste de guidage d'au moins un patin de guidage du panneau mobile.

L'avant et l'arrière du panneau mobile peuvent ainsi être guidés indépendamment l'un de l'autre.

Avantageusement, les pistes sont superposées, la piste de guidage s'étendant au-dessus de la glissière, la largeur de la piste de guidage étant plus importante que celle de la glissière.

Cet arrangement des pistes de guidage permet de réduire l'encombrement du dispositif d'obturation.

Préférentiellement, la tige de verrouillage comprend au moins une portion de renfort, au niveau de laquelle elle présente un diamètre supérieur au diamètre du reste de la tige.

Cette portion de renfort permet de renforcer la tige dans les zones soumise aux efforts les plus importants. En conséquence, les zones de la tige soumis à des efforts plus faibles peuvent par conséquent être de diamètre plus faible. Ceci permet donc de réduire l'encombrement, le poids et le prix de cette tige.

Selon un mode de réalisation de l'invention, le panneau mobile est guidé en coulissement dans le rail inférieur par au moins un patin comprenant une collerette, assurant essentiellement un contact avec une surface horizontale du rail, et un pion de guidage cylindrique, assurant essentiellement un contact avec une surface verticale du rail.

Selon un autre mode de réalisation, le panneau mobile est guidé en coulissement contre le rail inférieur par au moins un patin rapporté par clippage sur une portion d'accrochage prévue à cet effet.

Ce mode de réalisation permet un montage particulièrement simple du patin.

Avantageusement, le panneau mobile coopère avec des moyens de rappel, destinés à plaquer le panneau mobile contre le rail inférieur.

Ces moyens de rappel sont préférentiellement montés en partie supérieure du panneau mobile et prennent appui sur ledit rail supérieur.

Avantageusement, ces moyens de rappel sont constitués par une lame ressort, conformée pour présenter au moins deux points distincts d'appui sur le rail supérieur et au moins deux point distincts d'appui sur le panneau mobile.

Selon un mode de réalisation préférentiel, la lame ressort présente une forme de M.

De tels moyens de rappel permettent d'assurer de façon particulièrement simple et efficace l'isostatisme du panneau mobile. Ils sont très simple à monter et efficace pour appliquer une force vers le bas répartie sur la partie supérieure du panneau mobile.

Selon un mode de réalisation particulier de l'invention, au moins un des rails porte, à au moins une de ses extrémités, un bouchon de fermeture du rail.

Le rail peut ainsi être fabriqué ouvert. Cela permet donc un montage particulièrement facile du panneau mobile dans l'ensemble fixe, par l'extrémité du rail. L'ouverture du rail est ensuite bouchée de façon à éviter le démontage.

L'invention concerne également un véhicule équipé d'un dispositif d'obturation tel que décrit précédemment.

### 5. Liste des figures

D'autres caractéristiques et avantages de l'invention apparaîtront plus clairement à la lecture de la description suivante d'un mode de réalisation préférentiel de l'invention, et de certaines de ses variantes, donnés à titre d'exemples illustratifs et non limitatifs, et des dessins parmi lesquels :
- la figure 1 est une vue en perspective d'un dispositif d'obturation selon l'invention ;
- la figure 2 est une vue de face simplifiée d'un dispositif d'obturation selon l'invention ;
- la figure 3 est une vue de détail d'un dispositif d'obturation selon l'invention, montrant un patin de guidage de la zone inférieure avant du panneau mobile dans un rail de l'ensemble fixe ;
- la figure 4 est une vue de détail du patin de guidage de la figure 3 selon un mode de réalisation de l'invention ;
- la figure 5 est une vue de détail du patin de guidage de la figure 3 selon un autre mode de réalisation de l'invention ;
- la figure 6 est une vue de détail d'un patin de guidage de la zone supérieure avant du panneau mobile d'un dispositif d'obturation selon l'invention ;
- la figure 7 est une vue d'une lame ressort destinée à équiper le dispositif d'obturation de la figure 1 ;
- la figure 8 montre le panneau mobile du dispositif d'obturation de la figure 1 équipée de la lame ressort de la figure 7 ;
- la figure 9 est une vue de détail de la zone supérieure arrière du panneau mobile d'un dispositif d'obturation selon un mode de réalisation de l'invention ;
- la figure 10 montre un patin destiné à équiper les zones supérieure et inférieure arrières du panneau mobile représenté par la figure 9;
- la figure 11 est une vue de détail d'un dispositif d'obturation portant le patin de la figure 10 ;
- la figure 12 montre un autre patin destiné à équiper les zones supérieure et inférieure arrière du panneau mobile d'un dispositif d'obturation selon un autre mode de réalisation de l'invention ;
- la figure 13 est une vue de détail d'un dispositif d'obturation portant le patin de la figure 12 ;
- la figure 14 est une vue de détail de la zone inférieure arrière du panneau mobile d'un dispositif d'obturation selon un mode de réalisation de l'invention ;
- la figure 15 montre une tige de guidage et de verrouillage destinée à équiper le panneau mobile d'un dispositif d'obturation selon l'invention ;
- la figure 16 est une vue de détail d'un dispositif d'obturation selon un mode de réalisation de l'invention, montrant la zone inférieure arrière du panneau mobile équipée de la tige de la figure 15 ;
- la figure 17 est une vue de coupe du rail inférieur de l'ensemble fixe d'un dispositif d'obturation selon un mode de réalisation de l'invention ;
- les figures 18 et 19 sont des vues de détail, respectivement de devant et de derrière, des poignées équipant le panneau mobile du dispositif d'obturation de la figure 1 ;
- les figures 20 à 22 sont des vues de détail du rail inférieur de l'ensemble fixe du dispositif d'obturation de la figure 1 ;
- la figure 23 montre un clip de fermeture destiné à équiper l'extrémité des rails de l'ensemble fixe du dispositif d'obturation selon un mode de réalisation de l'invention ;
- les figures 24 et 25 montrent l'extrémité d'un rail de l'ensemble fixe du dispositif d'obturation selon un mode de réalisation de l'invention , respectivement non équipé et équipé du clip de la figure 23.

### 6. Description d'un mode de réalisation de l'invention

### 6.1. Principe de la baie flush

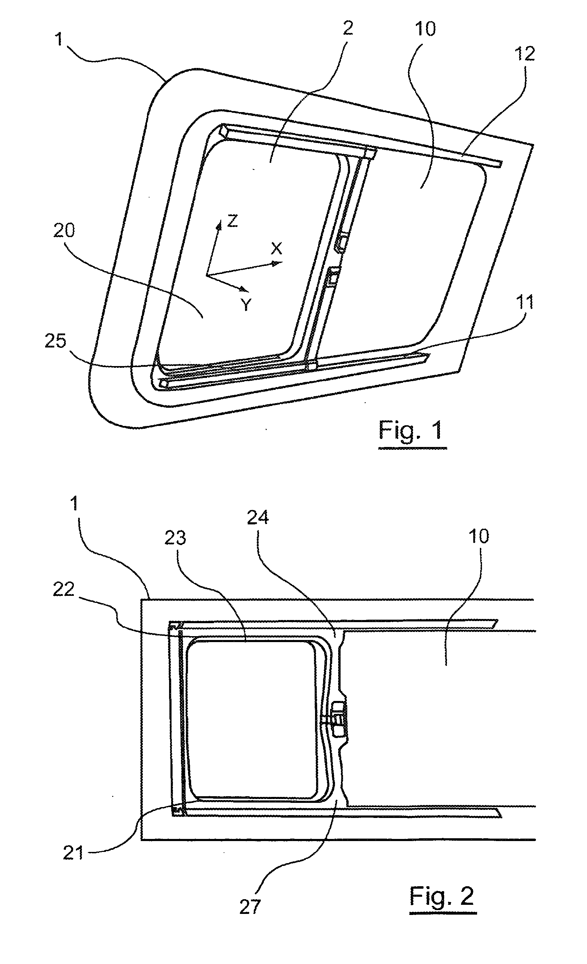

Les figures 1 et 2 montrent un dispositif d'obturation d'une baie ménagée dans la carrosserie d'un véhicule, de type dit « baie flush », intégrant différents aspects de l'invention.

Ce dispositif d'obturation comprend un ensemble fixe 1, destiné à être fixé à la carrosserie du véhicule, et présentant une ouverture. Sur cet ensemble fixe est monté un panneau mobile 2, susceptible de coulisser le long de rails de guidage 11 et 12 montés en partie supérieure et en partie inférieure de l'ensemble fixe, entre une position d'obturation et une position d'ouverture.

Dans sa position d'obturation (illustrée par les figures 1 et 2) le panneau mobile 2 obture l'ouverture de l'ensemble fixe 1, et s'inscrit dans le plan de l'ensemble fixe 1. Dans sa position d'ouverture, le panneau mobile 2 est dégagé de l'ouverture de l'ensemble fixe 1.

Quand le panneau mobile 2 quitte sa position d'obturation, il passe dans une position de coulissement dans laquelle il est dans un plan, dit plan de coulissement, parallèle à celui de l'ensemble fixe 1, le panneau mobile 2 étant en l'occurrence décalé vers l'intérieur du véhicule. Il peut ainsi coulisser vers une position d'ouverture.

Tel qu'illustré par les figures 1 et 2, l'ensemble fixe 1 comprend :
- un panneau fixe 10, en l'occurrence une vitre ; et
- un rail inférieur 11 et un rail supérieur 12, destinés à maintenir et à guider le panneau mobile 2, qui sont fixés, par exemple par collage, au panneau fixe 10.

Le panneau mobile 2 est constitué d'un panneau vitré 20, équipé des éléments suivants :
- un cadre intérieur 25, ici en matière plastique, sur lequel le panneau vitré 20 est fixé ;
- un joint (non représenté) intercalé entre le panneau vitré 20 et le cadre 25 ;
- des moyens de verrouillage présentés plus en détails par la suite ;
- des patins de coulissement guidés dans les rails.

Bien entendu, ce panneau mobile 2 comprend également l'ensemble des moyens de fixation permettant de solidariser ces éléments entre eux.

### 6.2. Guidage du panneau mobile par rapport à l'ensemble fixe

Le maintien et le guidage du panneau mobile 2 dans l'ensemble fixe 1 est faite de façon isostatique pour garantir le bon fonctionnement du produit, et en particulier éviter les blocages ou les jeux trop importants.

Pour cela, des éléments de guidage adaptés sont prévus dans différentes zones du panneau mobile 2, et notamment les zones inférieure avant 21, supérieure avant 22, supérieure 23, supérieure arrière 24 et inférieure arrière 27 du panneau mobile.

Il est à noter que la zone avant, ou zone distale, est la zone du panneau mobile éloignée des moyens de verrouillage. La zone arrière, ou zone proximale, est la zone du panneau mobile proche des moyens de verrouillage. Sur les figures 1 et 2, la zone avant du panneau mobile 2 est donc représentée sur la gauche, et la zone arrière sur la droite.

Plus précisément, et en utilisant les axes (X, Y, Z) représentés sur la figure 1, le panneau mobile 2 est équipée, selon l'invention, d'éléments de guidage le long des rails inférieur 11 et supérieur 12 (s'étendant dans la direction de l'axe X) agissant, dans la position de coulissement ou dans la position d'ouverture, de la façon suivante :
- dans la zone inférieure avant 21, un patin de guidage, ou patin guidant, en contact avec le rail inférieur 11 selon l'axe Y et l'axe Z ;
- dans la zone supérieure avant 22, un pion guidant, en contact avec le rail supérieur 12 selon l'axe Y ;
- dans la zone inférieure arrière 27, un patin, en contact avec le rail inférieur 11 selon l'axe Z, et le pêne formé par l'extrémité de la tige de verrouillage, en contact avec le rail inférieur 11 selon l'axe Y ;
- dans la zone supérieure arrière 24, le pêne formé par l'extrémité de la tige de verrouillage, en contact avec le rail supérieur 12 selon l'axe Y;
- dans la zone supérieure 23, une lame ressort vient en appui contre le rail supérieur 12 selon l'axe Z afin d'assurer le contact du panneau mobile 2 avec le rail inférieur 11.

Dans la position de coulissement, ces éléments de guidage n'autorisent donc que le coulissement selon l'axe X du panneau mobile 2 par rapport à l'ensemble fixe 1.

Il convient de préciser que, dans la position d'obturation ou à proximité de cette position, ces éléments de guidage peuvent agir selon des directions différentes de celles indiquées ci-dessus. En effet, pour assurer le verrouillage, les rails 11 et 12 présentent, à proximité de la position d'obturation, une forme particulière qui est décrite ci-après.

### 6.3. Description des éléments de guidage,

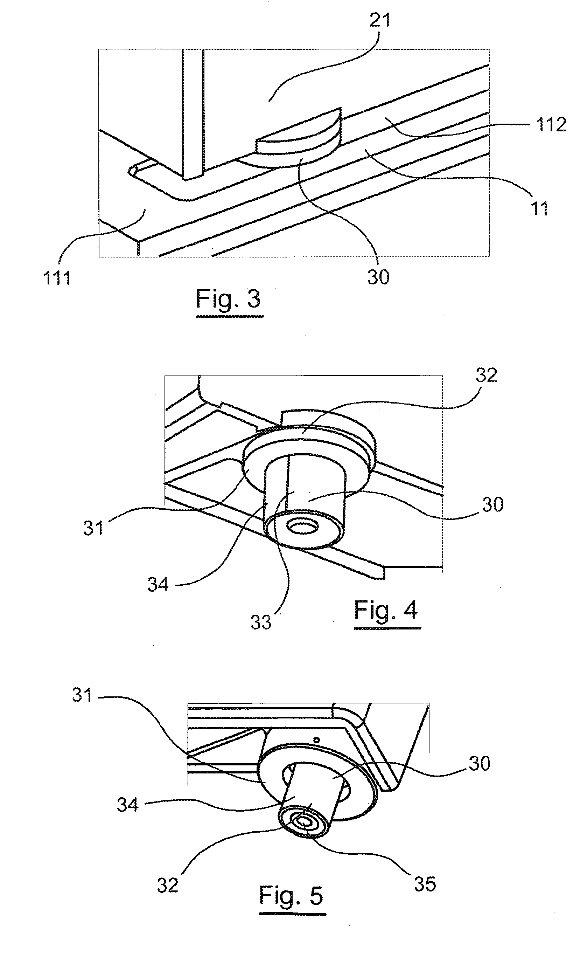

Chacun des éléments de guidage énumérés ci-dessus est présenté plus en détail ci-dessous, en relation avec les figures 3 à 14 et 17.

### 6.3.1. Les patins guidant à l'avant

Le patin de coulissement prévu dans la zone inférieure avant 21 du panneau mobile doit être un patin guidant ou patin de guidage, destiné à la fois à faire reposer le panneau mobile sur le rail inférieur 11 de l'ensemble fixe, selon une direction Z horizontale, et à guider le panneau mobile dans la piste du rail inférieur 11 afin qu'il ne puisse se déplacer que selon l'axe X. Pour cela, ce patin, dit patin inférieur avant, comporte à la fois une collerette et un pion de guidage.

La figure 3 représente la zone inférieure avant 21 du panneau mobile 2 et le rail inférieur 11 de l'ensemble fixe 1. Les figures 4 et 5 représentent la zone inférieure avant 21 du panneau mobile 2, et permettent de voir le patin inférieur avant 30 selon deux mode de réalisation. Ces patins comportent deux surfaces de contact : une surface horizontale 31 et une surface verticale 33.

La surface horizontale 31 est destinée à venir en contact avec une surface supérieure horizontale 111 du rail inférieur 11. Cette surface plate en forme d'anneau est formée par une collerette 32. La surface verticale 33 est la surface cylindrique d'un pion de guidage 34. Cette surface est destinée à coopérer avec des surfaces de guidage latérales 112 du rail inférieur 11 pour guider le coulissement de l'avant du panneau mobile 2.

Ce patin inférieur avant 30 peut être notamment fabriqué selon deux modes de réalisation représentés respectivement par les figures 4 et 5.

Selon le mode de réalisation représenté par la figure 4, l'axe 35 et le patin inférieur 30 est composé d'une seule pièce, comportant la collerette 32 et le pion de guidage 34. Ce mode de réalisation permet de réduire le nombre de pièce et le temps de montage en obtenant une seule et même pièce par exemple par un procédé de décolletage, frappe à froid ou injection.

Selon le mode de réalisation représenté par la figure 5, le patin est constitués d'un axe 35 par lequel il est liés au panneau mobile, le pion de guidage 34 étant fixé sur cet axe. Le pion de guidage 34 peut ainsi être constitué d'un matériau plastique présentant un faible coefficient de frottement, alors que l'axe 35, qui est uniquement une pièce de résistance mécanique peut être en acier.

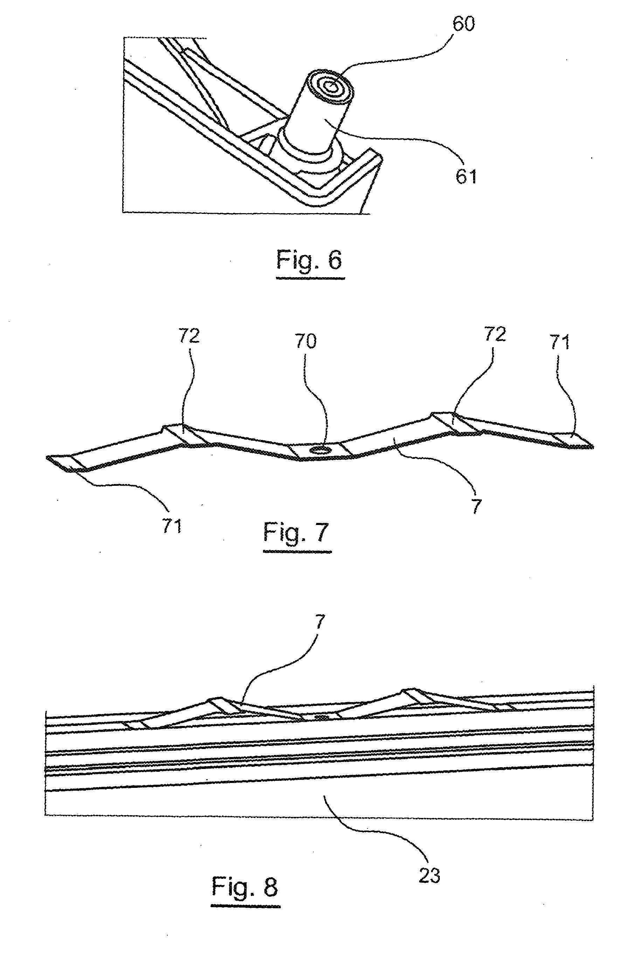

La zone supérieure avant 22, et le patin de coulissement qui y est prévu, dit patin supérieur avant, sont représentés par la figure 6. Ce patin 60 doit être un patin guidant, destiné à guider le panneau mobile 2 dans la piste du rail supérieur 12 afin qu'il ne puisse se déplacer que selon l'axe X. Pour cela, ce patin 60, comporte un pion de guidage 61, qui est semblable à celui du patin inférieur avant.

### 6.3.2. Le patin non guidant à l'arrière complété par la tige de verrouillage

Le guidage de l'arrière du panneau mobile 2 dans les rails est assuré, selon l'invention par les pênes formés par les extrémités des tiges de verrouillage. En conséquence, seul un patin de support, non guidant, destiné à faire reposer le panneau mobile sur le rail inférieur 11 de l'ensemble fixe, selon une direction Z horizontale est nécessaire dans la zone inférieure arrière 27 du panneau mobile 2.

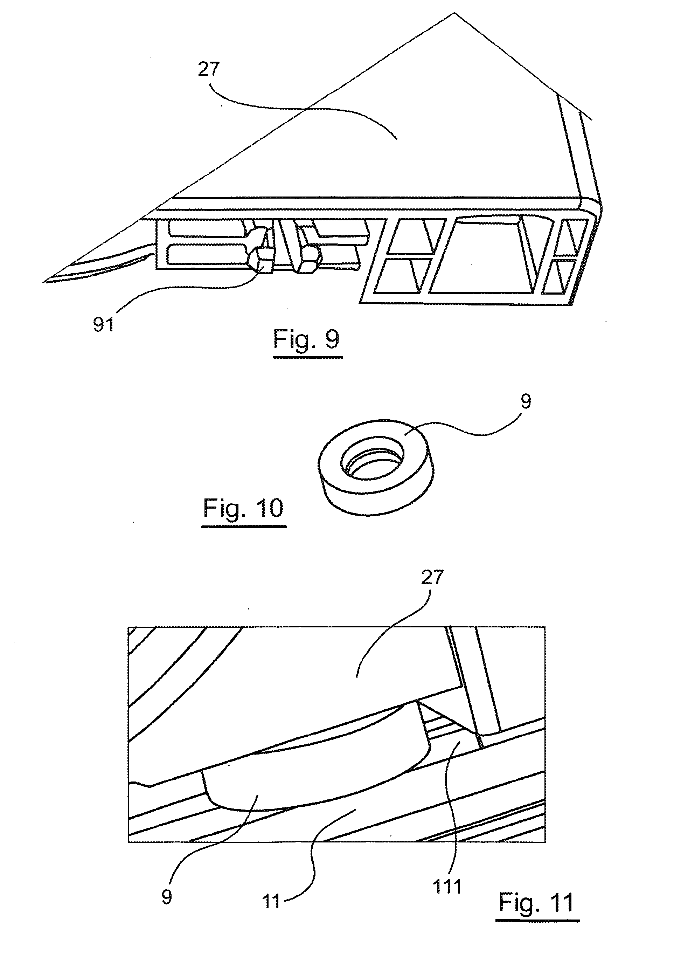

Les figures 9 à 14 présentent cette partie inférieure arrière 27 et les patins inférieurs arrières qui l'équipent, selon deux modes de réalisation.

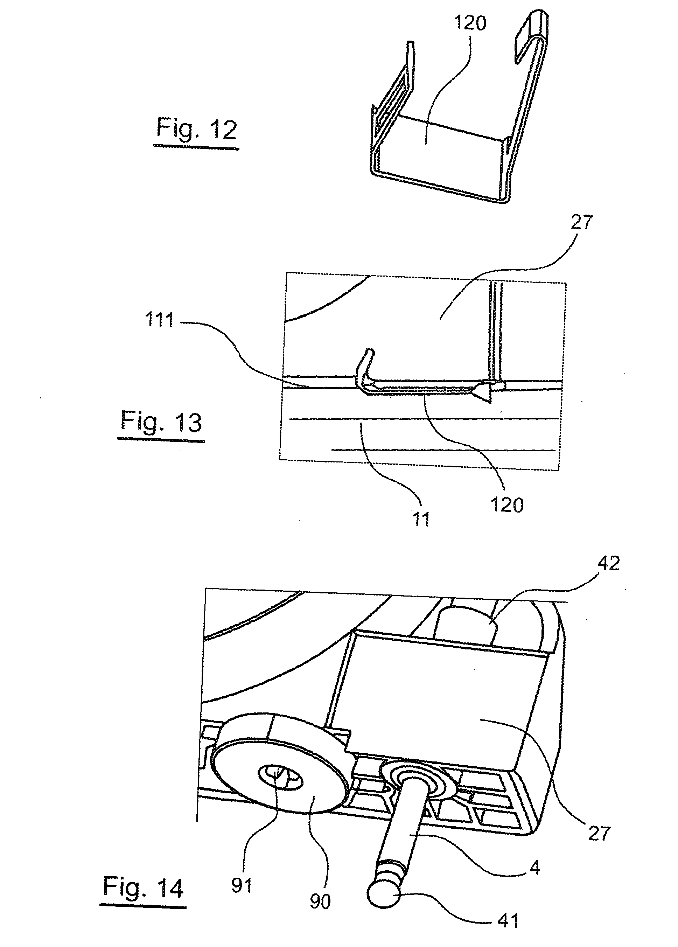

Selon un premier mode de réalisation représenté par les figures 12 et 13, un patin 120 constitué d'une plaque métallique pliée est clippé sous la partie inférieure arrière 27 du panneau mobile 2. Ce patin 120 permet un bon glissement de la partie inférieure arrière 27 sur la surface supérieure horizontale du rail 11.

Il assure également, du fait de la souplesse introduite par les moyens de clippage, une fonction antibruit, et présente l'avantage d'un montage simple.

Les figures 9, 10, 11 et 14 illustrent un autre mode de réalisation. Selon ce mode de réalisation, on utilise le même patin que celui utilisé à l'avant (figure 5), ce qui permet de simplifier la fabrication, notamment en limitant le nombre de pièces distinctes, et donc en augmentant la standardisation.

Le patin se présente donc sous la forme d'une bague 90, par exemple en élastomère (PTFE), et est solidarisé partie inférieure arrière 27 du panneau mobile 2 par l'intermédiaire d'éléments de clippage 91. L'assemblage ainsi obtenu (figures 11 et 14) est particulièrement simple et efficace.

L'appui du panneau mobile 2 sur la surface horizontale 111 du rail inférieur 11 est assuré par l'épaisseur du patin 90. Le maintien du patin 90 et une fonction antibruit sont assurés par les moyens de clippage 91.

### 6.3.3. La tige de verrouillage

Comme l'illustre la figure 14, qui représente la partie inférieure arrière 27 du panneau mobile, une extrémité d'une tige inférieure de verrouillage 4 dépasse de la partie inférieure arrière 27 du panneau mobile 2. Cette tige inférieure de verrouillage 4 assure une fonction de guidage, et est destinée à coopérer avec des surfaces de guidage latéral du rail inférieur 11 pour guider le coulissement de l'arrière du panneau mobile 2.

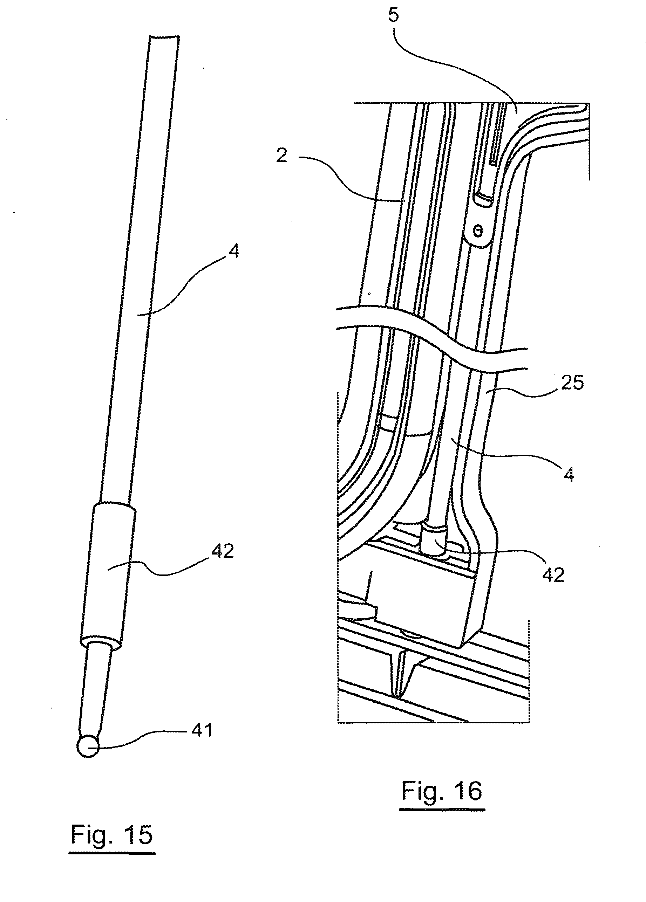

Comme le présentent les figures 14 et 15, l'extrémité de la tige inférieure de verrouillage 4 présente une portion sphérique, ou rotule 41. Cette rotule 41 forme le pêne, qui est alors constitué par l'extrémité de la tige et ne doit donc pas être rapporté et fixé à l'extrémité de celle-ci.

La forme particulière en rotule permet d'optimiser le guidage dans la glissière du rail (en forme de gouttière), ainsi que dans la rampe de verrouillage décrite par la suite. Ainsi, elle permet de limiter les frottements, et notamment de les réduire de façon importante dans le cas ou le rail de guidage présenterait un défaut d'alignement avec la tige de verrouillage.

Sa forme de révolution simplifie également le montage. En effet, lors du montage du panneau mobile 2 dans l'ensemble fixe 1, il n'est par conséquent pas nécessaire d'orienter la tige pour la faire pénétrer dans le rail 11. Cette forme permet donc un montage du dispositif d'obturation plus facile que dans les solutions de l'art antérieur selon lesquelles l'extrémité de la tige de verrouillage était muni d'une gâche classiquement parallélépipédique.

Une tige supérieure de verrouillage, dont l'extrémité peut être identique à celle de la tige inférieure de verrouillage 4, peut également être prévue. Elle dépasse de la partie supérieure arrière 24 du panneau mobile 2. Cette tige supérieure de verrouillage joue également le rôle d'un pion de guidage, et est destinée à coopérer avec des surfaces de guidage latéral du rail supérieur 12 pour guider le coulissement de l'arrière du panneau mobile 2.

### 6.3.4. Lame ressort sur la partie supérieure

La figure 8 représente la partie supérieure 23 du panneau mobile 2. La surface supérieure de cette partie du panneau mobile 2 est équipée de moyens de rappel visant à plaquer le panneau mobile dans le rail inférieur, sous la forme d'une lame ressort 7, qui est également présentée sur la figure 7.

Cette lame ressort 7 présente une forme générale de M, et comporte un point de fixation 70 au panneau mobile, deux points d'appui 71 sur la surface supérieure du panneau mobile 2, et deux points d'appui 72 sur une surface inférieure horizontale du rail supérieur 12.

Cette lame ressort permet de plaquer le panneau mobile 2 contre le rail inférieur 11, par l'intermédiaire des patins inférieur arrière et inférieur avant, d'une façon efficace et particulièrement simple. Ainsi, avec une seule lame ressort très facile à monter, il est possible d'appuyer en deux endroits éloignés l'un de l'autre sur le rail 12. La force exercée est par conséquent bien répartie, ce qui permet de lutter contre les porte-à-faux, et limite les risques que le panneau mobile 2 se bloque.

D'autres formes de lames, et le cas échéant plusieurs lames, peuvent être prévus.

### 6.3.5. Le rail double

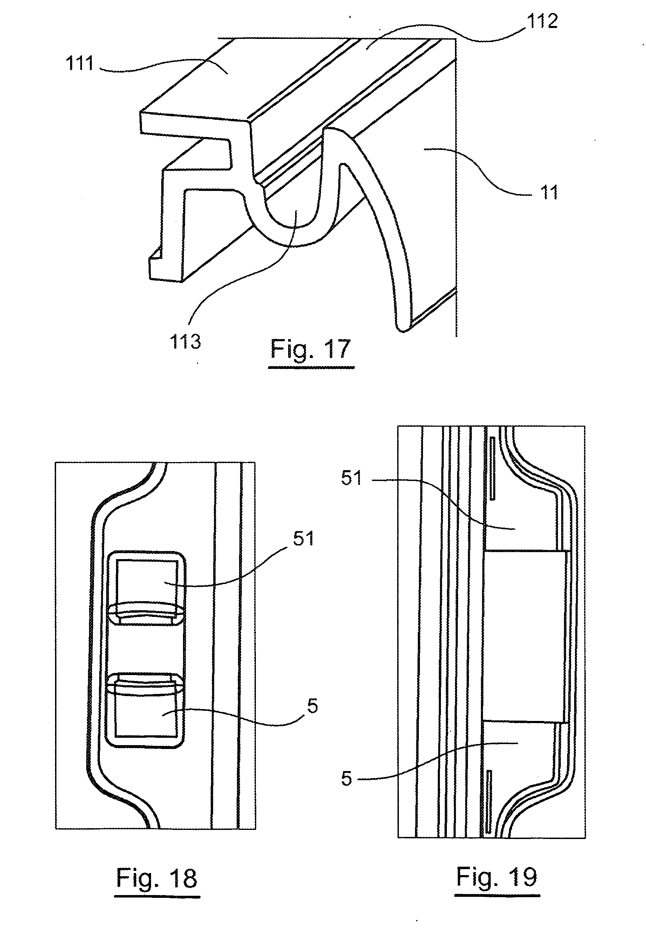

La figure 17 représente une vue de coupe du rail inférieur 11 de l'ensemble fixe 1, dans une zone dans laquelle le pêne formé par l'extrémité de la tige de verrouillage est susceptible de coulisser. Ce rail 11 présente une surface supérieure horizontale 111 permettant l'appui des patins selon une direction horizontale. Il comporte également une rainure définissant deux pistes de guidage. Chacune de ces piste de guidage comporte des surfaces verticales, ou parois de guidage latéral, permettant des guidages :
- une piste supérieure de guidage des pions, constituée par des parois de guidage latéral 112 ;
- une piste inférieure, ou glissière 113, en forme de gouttière, destinée à guider le coulissement du pêne formé par la rotule 41 constituant l'extrémité de la tige de verrouillage.

Selon l'invention, ces parois de guidage latéral 112 et cette glissière 113 permettent le guidage indépendant du pion de guidage 34 et du pêne formé par la rotule 41. Ainsi, la piste supérieure, située dans la partie supérieure de la rainure du rail 11, permet le guidage du pion de guidage 34. La piste inférieure, ou glissière 113, et plus particulièrement ses parois latérales, permettent le guidage du pêne formé par la rotule 41 constituant l'extrémité de la tige de verrouillage, dont le diamètre est moins important que celui du pion de guidage 34.

Ce rail 11 permet donc de guider de façon indépendante le pion de guidage 34 et la tige de verrouillage 4, en limitant au maximum son encombrement, du fait que les pistes sont superposées.

### 6.3.6. Fermeture des rails et montage du panneau mobile par le côté

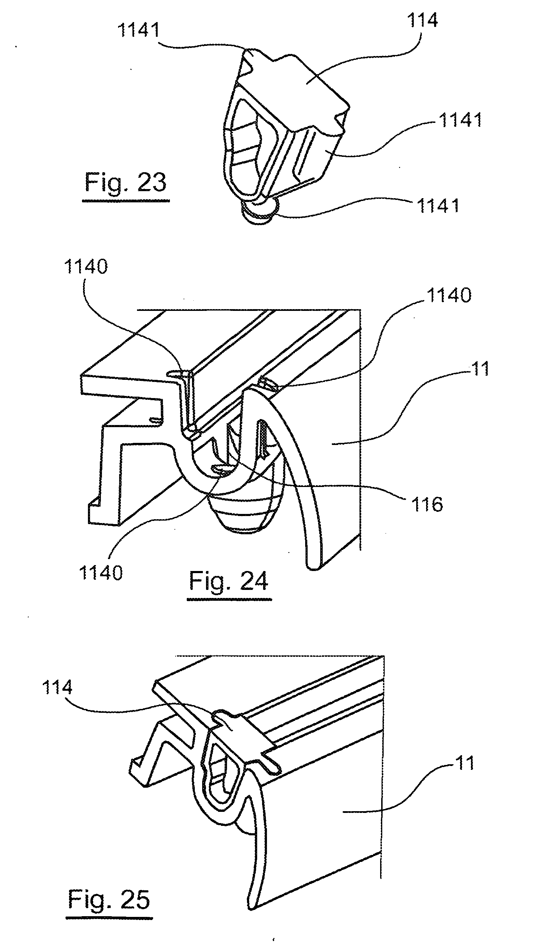

La figure 24 représente l'extrémité du rail 11, à l'arrière de l'ensemble fixe 1. Comme on peut le constater, le rail est ouvert à son extrémité, et comporte à ce niveau la piste supérieure de guidage des pions, permettant le guidage du pion de guidage 34, bien que ce pion de guidage ne soit pas destiné à coulisser dans cette portion du rail lors des déplacements normaux du panneau mobile 2. Cette conformation des rails permet le montage du panneau mobile 2 sur l'ensemble fixe 1 de façon particulièrement facile, par coulissement par l'extrémité des rails.

Après le montage, comme le montre la figure 25, l'extrémité du rail est obturée très simplement par un bouchon, ou clip de fermeture 114, représenté sur la figure 23, qui comporte un corps destiné à obturer la rainure du rail 11 et des portions de fixation 1141 destinées à se fixer dans des ouvertures de fixation 1140 prévues dans le rail 11.

Le rail supérieur 12 peut être avantageusement identique au rail inférieur 11, afin de guider le haut du panneau mobile 2. Comme il sera expliqué par la suite, la conformation des rails à proximité de la position d'obturation permet également de participer au verrouillage du panneau mobile en position d'obturation.

### 6.4. Verrouillage

Selon l'invention, le passage du panneau mobile 2 du plan de coulissement au plan d'obturation est obtenu à l'aide de la tige de verrouillage 4 dont la première extrémité forme un pêne conformée de façon à coopérer avec une gâche 115 ménagée dans le rail 11.

Cette tige 4 est représentée seule sur la figure 15, et montée dans le panneau mobile 2 sur la figure 16. Elle est montée coulissante sur le panneau mobile 2 entre une position de verrouillage et une position de déverrouillage, dans une direction perpendiculaire à la direction de coulissement du panneau mobile 2. Dans le cas présent, le panneau mobile 2 est mobile horizontalement et le mouvement de verrouillage/déverrouillage de la tige 4 est obtenu en la déplaçant verticalement, le long du panneau mobile 2. Pour cela, la tige 4 présente, à sa seconde extrémité, une poignée 5.

### 6.4.1. Système de poignée

Comme le représente la figure 16, la poignée 5 est fixée à la tige 4. Elle permet d'exercer une traction sur la tige 4 et de la faire glisser de façon que son extrémité formant la rotule 41, qui dépasse du panneau mobile, se rétracte vers celui-ci. Des moyens de rappel, non représentés, tendent à repousser la tige 4 de façon à faire ressortir son extrémité.

Par ailleurs, une seconde tige identique est montée en partie supérieure de l'ensemble fixe 1. Une poignée 51 similaire est associée à cette seconde tige. Aussi, comme le représentent les figures 18 et 19, les tiges sont préférentiellement dimensionnées de façon que les poignées soient montées au voisinage l'une de l'autre, de telle sorte qu'elles puissent être actionnées ensemble d'une seule main.

Il est bien évidemment possible de mettre en oeuvre toute autre sorte de poignée permettant d'exercer une traction sur une des tiges ou sur les deux simultanément. On peut également prévoir un mécanisme à tige unique, portant un pêne à chacune de ses extrémités.

### 6.4.2. Tige de verrouillage

La tige de verrouillage 5 est de préférence une tige métallique de faible diamètre. En effet, plus les dimensions de cette tige 5 sont importantes, plus le cadre 25 du panneau mobile qui recouvre la tige et la guide en coulissement doit être important. Ce cadre 25 masquant une partie du panneau mobile vitré 20 du panneau mobile 2, il est nécessaire de restreindre au maximum ses dimensions pour augmenter le clair de jour du dispositif d'occultation.

Ainsi, pour éviter que ce cadre 25 ne masque le panneau mobile de façon excessive, la tige de verrouillage est plus fine sur les parties bordant la baie vitrée, et ne comporte un renfort que dans la portion qui est soumise aux efforts les plus importants. Comme le montrent les figures 15 et 16, la tige 4 comporte une portion de renfort 42 qui se présente comme une portion de tige de diamètre supérieur. Cette portion de renfort 42 est située, lorsque la tige est montée sur l'élément mobile 2, dans un coin de cet élément mobile. Par conséquent, elle ne rend pas nécessaire une augmentation de la taille du cadre 25 sur la majorité de la bordure du panneau mobile 2.

Par ailleurs, cette portion de renfort 42 peut également servir de butée de fin de course afin de limiter le déplacement en translation de la tige 4.

### 6.4.3. Gâches du rail de guidage.

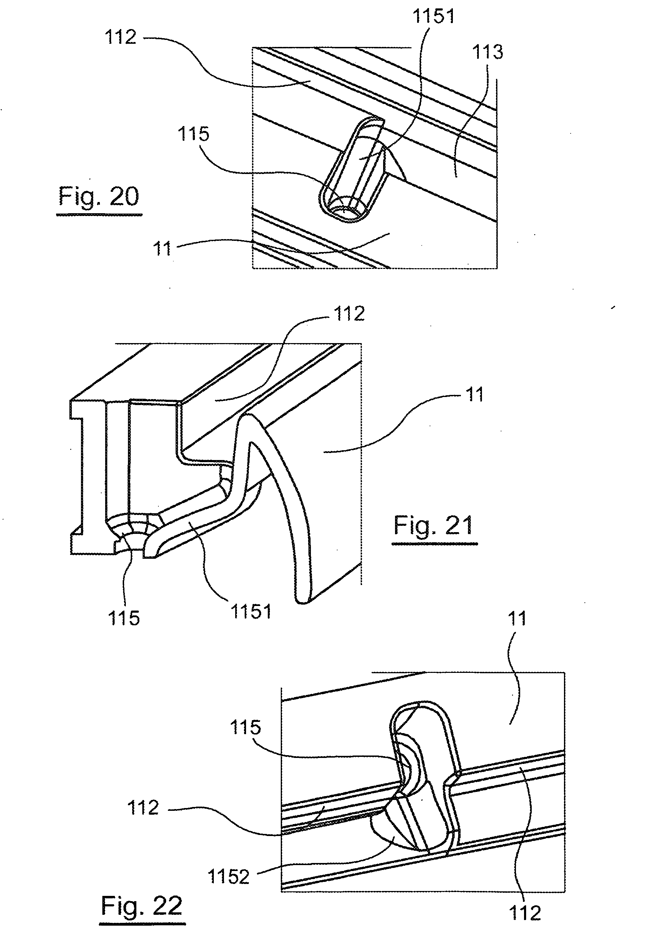

Les figures 20 à 22 représentent la portion de rail de guidage qui correspond à la position de la tige de verrouillage 4 quand le panneau mobile est en position d'occultation. Le rail comporte dans cette position une gâche 115 conçue pour que le pêne constitué par l'extrémité en forme de rotule 41 de la tige de verrouillage 4 vienne s'y verrouiller. Pour cela, la piste de guidage de la tige de verrouillage 4 dans le rail présente, dans le prolongement de la glissière assurant le contrôle du coulissement, une rampe de guidage progressif, ou rampe, comprenant une pente 1151 s'étendant perpendiculairement à l'axe général du rail. La rotule 41 de la tige de verrouillage 4, en arrivant sur cette pente 1151, est entraînée le long celle-ci, poussée par ses moyens de rappel. En suivant cette pente, la tige de verrouillage 4 entraîne la partie arrière du panneau mobile 2, qui se décale par rapport à l'ensemble fixe 1, pour se placer dans son plan d'obturation.

À l'extrémité de la pente 1151, la rotule 41 de la tige de verrouillage 4 s'engage dans la gâche 115, ce qui a pour effet de verrouiller la position du panneau mobile 2 par rapport à l'ensemble fixe 1. Il est nécessaire, pour le déverrouiller, d'agir sur la tige de verrouillage 4, par l'intermédiaire des poignées, afin de sortir la rotule 41 de la gâche 115.

Afin de faciliter le verrouillage et d'éviter que l'utilisateur ne laisse le panneau mobile non verrouillé alors qu'il pense l'avoir verrouillé, la rampe présente une forme générale de L dont la partie principale, ou partie de verrouillage est la pente 1151, perpendiculaire à l'axe principal du rail et la partie secondaire, ou partie de positionnement est une pente 1152 s'étendant dans le prolongement de la glissière, pour former amorce de guidage, et faciliter la fermeture. Ainsi, si le panneau mobile 2 est placé par l'utilisateur de façon que la tige de verrouillage 4 soit située à proximité immédiate de la gâche 115, la tige 4 sera entraînée par l'amorce de la rampe, ou pente 1152 vers la pente 1151, puis vers cette gâche 115, ce qui assure le verrouillage.

Il est à noter que la pente de la partie de positionnement 1152 est plus faible que celle de la partie de verrouillage 1151, pour assurer un guidage progressif.

La gâche 115 forme l'extrémité de la glissière 113, ou piste de guidage du pêne formé par la rotule 41 dans le rail 11. Cependant, comme le montrent les figures 20 à 22, la piste supérieure de guidage des pions de guidage dans ce même rail 11, constituée par des parois de guidage latéral 112, se prolonge au-delà la gâche 115.

### 6.4.4. Positions intermédiaires

Le rail 11 peut être formé de façon que le pêne constitué par la rotule 41 puisse contribuer au blocage du panneau mobile 2 en une ou plusieurs positions intermédiaires d'ouverture entre la position d'obturation et la position d'ouverture complète de la baie. Pour cela, le fond de la glissière 113 du rail 11 présente en plusieurs positions des évidements 116 tels que celui représenté sur la figure 24, dans lesquels le pêne peut se loger, bloquant ainsi le coulissement du panneau. Il est alors nécessaire d'actionner la poignée correspondante pour poursuivre le coulissement du panneau.

## Revendications

1. Dispositif d'obturation d'une baie ménagée dans la carrosserie d'un véhicule automobile, comprenant un ensemble fixe 1 et au moins un panneau mobile 2 monté sur deux rails de guidage solidaire dudit ensemble fixe, un rail inférieur 11 et un rail supérieur 12, de façon à pouvoir coulisser dans un premier plan de coulissement sensiblement parallèle à un second plan défini par ledit ensemble fixe 1, et pouvant venir obturer ou libérer une ouverture ménagée dans ledit ensemble fixe 1, ledit panneau mobile 2 se plaçant dans ledit second plan, en position d'obturation,
ledit panneau mobile 2 portant au moins un pêne destiné à coopérer avec une gâche formée dans un desdits rails,
**caractérisé en ce que** ledit rail présente une rampe de guidage progressif formée entre ladite gâche 115 et une glissière 113 définie dans ledit rail, dans laquelle est guidé ledit pêne lors du passage dans ladite position d'obturation.

2. Dispositif d'obturation selon la revendication 1, **caractérisé en ce que** ledit pêne est formé par une rotule 41 s'étendant à une extrémité d'une tige de verrouillage 4.

3. Dispositif d'obturation selon l'une quelconque des revendications 1 et 2, **caractérisé en ce que** ladite rampe de guidage progressif présente une pente variable, plus faible au voisinage de ladite glissière 113 et plus importante au voisinage de ladite gâche 115.

4. Dispositif d'obturation selon l'une quelconque des revendications 1 à 3, **caractérisé en ce que** ladite rampe de guidage progressif présente au moins deux parties :
- une partie de positionnement, assurant un guidage sensiblement parallèle à l'axe de ladite glissière ;
- une partie de verrouillage, assurant un guidage sensiblement perpendiculaire à l'axe de ladite glissière.

5. Dispositif d'obturation selon l'une quelconque des revendications 1 à 4, **caractérisé en ce que** ledit rail comporte une rainure définissant deux pistes de guidage :
- d'une part ladite glissière ; et
- d'autre part une piste de guidage d'au moins un patin de guidage dudit panneau mobile.

6. Dispositif d'obturation selon la revendication 5, **caractérisé en ce que** lesdites pistes sont superposées, ladite piste de guidage s'étendant au-dessus de ladite glissière, la largeur de ladite piste de guidage étant plus importante que celle de ladite glissière.

7. Dispositif d'obturation selon l'une quelconque des revendications 2 à 6, **caractérisé en ce que** ladite tige de verrouillage 4 comprend au moins une portion de renfort 42, au niveau de laquelle elle présente un diamètre supérieur au diamètre du reste de ladite tige 4.

8. Dispositif d'obturation selon l'une quelconque des revendications 1 à 7, **caractérisé en ce que** ledit panneau mobile 2 est guidé en coulissement dans ledit rail inférieur 11 par au moins un patin comprenant une collerette 32, assurant essentiellement un contact avec une surface horizontale dudit rail, et un pion de guidage 34 cylindrique, assurant essentiellement un contact avec une surface verticale dudit rail 11.

9. Dispositif d'obturation selon l'une quelconque des revendications 1 à 8, **caractérisé en ce que** ledit panneau mobile est guidé en coulissement contre ledit rail inférieur par au moins un patin rapporté par clippage sur une portion d'accrochage prévue à cet effet.

10. Dispositif d'obturation selon l'une quelconque des revendications 1 à 9, **caractérisé en ce que** ledit panneau mobile 2 coopère avec des moyens de rappel, destinés à plaquer ledit panneau mobile 2 contre ledit rail inférieur 11.

11. Dispositif d'obturation selon la revendication 10, **caractérisé en ce que** lesdits moyens de rappel sont montés en partie supérieure dudit panneau mobile et prennent appui sur ledit rail supérieur 12.

12. Dispositif d'obturation selon la revendication 11, **caractérisé en ce que** lesdits moyens de rappel sont constitués par une lame ressort, conformée pour présenter au moins deux points distincts d'appui sur ledit rail supérieur et au moins deux point distincts d'appui sur ledit panneau mobile.

13. Dispositif d'obturation selon la revendication 12, **caractérisé en ce que** ladite lame ressort présente une forme de M.

14. Dispositif d'obturation selon l'une quelconque des revendications 1 à 13, **caractérisé en ce qu'**au moins un desdits rails porte, à au moins une de ses extrémités, un bouchon de fermeture dudit rail.

15. Véhicule automobile comprenant au moins un dispositif d'obturation selon l'une quelconque des revendications 1 à 14.

## Claims

1. Device for blocking an opening provided in the body of a motor vehicle, said device comprising a fixed unit 1 and at least one movable panel 2 which is mounted on two guide rails integral with the said fixed unit, a lower rail 11 and an upper rail 12, so as to be capable of sliding within a first plane of sliding motion substantially parallel to a second plane defined by the said fixed unit 1, and which movable panel is capable of blocking or unblocking an aperture provided in the said fixed unit 1, the said movable panel 2 taking up position within the said second plane when in the blocking position,
the said movable panel 2 carrying at least one bolt which is intended to cooperate with a notch formed in one of the said rails,
**characterised in that** the said rail has a progressive-guidance ramp formed between the said notch 115 and a slide 113 defined in the said rail, within which the said bolt is guided when the transition into the blocking position occurs.

2. Blocking device according to claim 1, **characterised in that** the said bolt is formed by a ball 41 extending at one end of a locking rod 4.

3. Blocking device according to either of claims 1 and 2, **characterised in that** the said progressive-guidance ramp has a variable slope which is shallower in the vicinity of the said slide 113 and steeper in the vicinity of the said notch 115.

4. Blocking device according to any of claims 1 to 3, **characterised in that** the said progressive-guidance ramp has at least two parts:
- a positioning part which brings about guidance which is substantially parallel to the axis of the said slide; and
- a locking part which brings about guidance which is substantially perpendicular to the axis of the said slide.

5. Blocking device according to any of claims 1 to 4, **characterised in that** the said rail comprises a groove defining two guide tracks:
- on the one hand, the said slide; and
- on the other hand, a track for guiding at least one guide shoe belonging to the said movable panel.

6. Blocking device according to claim 5, **characterised in that** the said tracks are superposed, the said guide track extending above the said slide, and the width of the said guide track being greater than that of the said slide.

7. Blocking device according to any of claims 2 to 6, **characterised in that** the said locking rod 4 comprises at least one strengthening portion 42, at which it has a diameter which is greater than the diameter of the rest of the said rod 4.

8. Blocking device according to any of claims 1 to 7, **characterised in that** the said movable panel 2 is guided in sliding motion within the said lower rail 11 by at least one shoe comprising a small collar 32, which essentially brings about contact with a horizontal surface of the said rail, and a cylindrical guide peg 34, which essentially brings about contact with a vertical surface of the said rail 11.

9. Blocking device according to any of claims 1 to 8, **characterised in that** the said movable panel 2 is guided in sliding motion against the said lower rail by at least one shoe which is added, by clipping, onto a coupling portion provided for that purpose.

10. Blocking device according to any of claims 1 to 9, **characterised in that** the said movable panel 2 cooperates with returning means which are intended to press the said movable panel 2 against the said lower rail 11.

11. Blocking device according to claim 10, **characterised in that** the said returning means are mounted in the upper part of the said movable panel 2 and are supported on the said upper rail 12.

12. Blocking device according to claim 11, **characterised in that** the said returning means are constituted by a spring blade which is shaped so as to have at least two distinct points at which it bears on the said upper rail and at least two distinct points at which it bears on the said movable panel.

13. Blocking device according to claim 12, **characterised in that** the said spring blade is M-shaped.

14. Blocking device according to any of claims 1 to 13, **characterised in that** at least one of the said rails carries, at at least one of its ends, a stopper for closing the said rail.

15. Motor vehicle comprising at least one blocking device according to any of claims 1 to 14.

## Patentansprüche

1. Vorrichtung zum Verschließen einer Öffnung einer Fahrzeugkarosserie, die eine feststehende Gruppe 1 und mindestens ein bewegliches Paneel 2 aufweist, wobei dieses bewegliche Paneel auf zwei Führungsschienen der besagten feststehenden Gruppe, einer unteren Schiene 11 und einer oberen Schiene 12 derart angebracht ist, dass sie in einer ersten Gleitebene gleiten können, die in etwa parallel zu einer zweiten, von der besagten feststehenden Gruppe 1 definierten Ebene liegt und in der Lage ist, eine in der besagten feststehenden Gruppe 1 angebrachte Öffnung frei zu verschließen, wobei das besagte bewegliche Paneel 2 in der besagten zweiten Ebene in eine Verschlussposition positioniert wird,
wobei das besagte bewegliche Paneel 2 mindestens ein Verschlussstück trägt, welches mit einer in einer der besagten Schienen ausgebildeten Schließmulde zusammenwirkt,
**dadurch gekennzeichnet, dass** die besagte Schiene eine progressive Führungsrampe aufweist, die zwischen der besagten Schließmulde 115 und einer in der besagten Schiene befindlichen Gleitbahn 113 ausgebildet ist, wobei das besagte Verschlussstück beim Übergang in die besagte Verschlussposition in der Gleitbahn geführt wird.

2. Vorrichtung zum Verschließen nach Anspruch 1, **dadurch gekennzeichnet, dass** das besagte Verschlussstück durch einen Kugelbolzen 41 gebildet wird, der sich an einem Ende einer Verriegelungsstange 4 erstreckt.

3. Vorrichtung zum Verschließen nach einem der Ansprüche 1 oder 2, **dadurch gekennzeichnet, dass** die besagte progressive Führungsrampe eine variable Steigung aufweist, die in der Umgebung der besagten Gleitbahn 113 geringer ist, während sie in der Umgebung der besagten Schließmulde 115 stärker ist.

4. Vorrichtung zum Verschließen nach einem der Ansprüche 1 bis 3, **dadurch gekennzeichnet, dass** die besagte progressive Führungsrampe mindestens zwei Teile aufweist:
- einen Positionierungsteil, das eine in etwa parallel zur Achse der besagten Gleitbahn verlaufende Führung gewährleistet,
- ein Verriegelungsteil, das eine in etwa senkrecht zur Achse der besagten Gleitbahn verlaufende Führung gewährleistet.

5. Vorrichtung zum Verschließen nach einem der Ansprüche 1 bis 4, **dadurch gekennzeichnet, dass** die besagte Schiene eine Rille aufweist, die zwei Führungsspuren bildet:
- einerseits die besagte Gleitbahn, und
- andererseits eine Führungsspur für mindestens eine Führungskufe des besagten beweglichen Paneels.

6. Vorrichtung zum Verschließen nach Anspruch 5, **dadurch gekennzeichnet, dass** die besagten Bahnen übereinander liegen, wobei sich die besagte Führungsbahn oberhalb der besagten Gleitbahn erstreckt und wobei die besagte Führungsbahn breiter als die besagte Gleitbahn ist.

7. Vorrichtung zum Verschließen nach einem der Ansprüche 2 bis 6, **dadurch gekennzeichnet, dass** die besagte Verriegelungsstange 4 mindestens einen verstärkten Teil 42 aufweist, wobei ihr Durchmesser an der Stelle dieses Teils stärker ist als auf dem Rest der besagten Stange 4.

8. Vorrichtung zum Verschließen nach einem der Ansprüche 1 bis 7, **dadurch gekennzeichnet, dass** das besagte bewegliche Paneel 2 gleitend in der besagten unteren Schiene 11 durch mindestens eine Kufe geführt wird, die einen Kragen 32 aufweist, der im Wesentlichen den Kontakt mit einer horizontalen Fläche der besagten Schiene sicherstellt sowie durch einen zylindrischen Führungsbolzen 34, der im Wesentlichen den Kontakt mit einer vertikalen Fläche der besagten Schiene 11 sicherstellt.

9. Vorrichtung zum Verschließen nach einem der Ansprüche 1 bis 8, **dadurch gekennzeichnet, dass** das besagte bewegliche Paneel durch mindestens eine Kufe gleitend gegen die besagte untere Schiene geführt wird, wobei diese Kufe an einem zu diesem Zweck vorgesehenen Teil zum Einhaken durch Einklicken angebracht wird.

10. Vorrichtung zum Verschließen nach einem der Ansprüche 1 bis 9, **dadurch gekennzeichnet, dass** das besagte bewegliche Paneel 2 mit Mitteln zum Rückholen zusammenwirkt, welche das besagte bewegliche Paneel 2 gegen die besagte untere Schiene 11 drücken sollen.

11. Vorrichtung zum Verschließen nach Anspruch 10, **dadurch gekennzeichnet, dass** die besagten Mittel zum Rückholen am oberen Teil des besagten beweglichen Paneels angebracht sind und sich auf der besagten oberen Schiene 12 abstützen.

12. Vorrichtung zum Verschließen nach Anspruch 11, **dadurch gekennzeichnet, dass** die besagten Mittel zum Rückholen aus einer Blattfeder gebildet werden, die derart ausgebildet ist, dass sie mindestens zwei verschiedene Abstützungspunkte auf der besagten oberen Schiene und mindestens zwei verschiedene Abstützungspunkte auf dem besagten beweglichen Paneel aufweist.

13. Vorrichtung zum Verschließen nach Anspruch 12, **dadurch gekennzeichnet, dass** die besagte Blattfeder die Form eines M aufweist.

14. Vorrichtung zum Verschließen nach einem der Ansprüche 1 bis 13, **dadurch gekennzeichnet, dass** mindestens eine der besagten Schienen an mindestens einem Ende einen Stopfen zum Verschließen der besagten Schiene trägt.

15. Kraftfahrzeug, das mindestens eine Vorrichtung zum Verschließen nach einem der Ansprüche 1 bis 4 aufweist.
